# EUROPÄISCHE PATENTSCHRIFT

(11) **EP 1 102 051 B1**
(45) Veröffentlichungstag und Bekanntmachung des Hinweises auf die Patenterteilung: **09.04.2003**
(21) Anmeldenummer: 00123697.5
(22) Anmeldetag: 31.10.2000
(51) Int. Cl.: G01M 15/00, F02D 13/04

(54) **Verfahren zur Ermittlung von Kennwerten eines Antriebs**
Method of determining parameters of a drive
Procédé pour déterminer des paramètres d'un mécanisme d'entraînement

(30) Priorität: 16.11.1999 US 440923
(43) Veröffentlichungstag der Anmeldung: 23.05.2001
(73) Patentinhaber: DEERE & COMPANY, Moline, Illinois 61265-8098 (US)
(72) Erfinder: Haugen, David James, Waterloo, IA 50701 (US)
(74) Vertreter: Magin, Ludwig Bernhard

(56) Entgegenhaltungen:
- US-A- 4 870 585
- US-A- 5 647 318

## Beschreibung

Die Erfindung betrifft ein Verfahren zur Ermittlung von Kennwerten eines Antriebs.

Üblicherweise wird das Verhalten eines Antriebs gemessen, indem der Antrieb in eine Testkabine gebracht und mit einem Dynamometer verbunden wird. Es sind kommerziell erhältliche Verbrennungsmotoren bekannt, welche eine elektronische Antriebssteuerungseinheit aufweisen, welche Kraftstoffzufuhrund Antriebsbremseinrichtungen steuern. Ein Bremssystem wandelt, wenn es aktiviert ist, einen oder mehrere Antriebszylinder des Antriebs von leistungserzeugenden in leistungsabsorbierende Einrichtungen um. Die Fähigkeit des Antriebs Leistung zu absorbieren kann variiert werden, indem eine unterschiedliche Anzahl von Bremseinrichtungen aktiviert wird. Jede Bremseinrichtung wandelt einen oder mehrere Antriebszylinder des Antriebs in leistungsabsorbierende Einheiten um. Eine solche Anordnung kann beispielsweise der US-A-5,647,318 entnommen werden.

Das der Erfindung zugrunde liegende Problem wird darin gesehen, daß bekannte Verfahren zur Überprüfung des Arbeitsverhaltens eines Antriebs in einem Prüfstand durchgeführt werden müssen bzw. solche Verfahren nicht an sich im Einsatz befindlichen Antrieben durchgeführt werden können.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird ein Verfahren zur Verfügung gestellt, das ohne die Verwendung eines Dynamometers sowohl an einem sich in einem Prüfstand befindlichen Antrieb, wie auch einem im Einsatz bzw. in einem eingebauten Zustand befindlichen Antrieb durchgeführt werden kann. Das Verfahren nützt die Fähigkeiten eines Antriebs mit einer Antriebssteuerungseinheit aus, welche die Kraftstoffzufuhr und die Motorbremsung steuert. Hierzu weist ein Verbrennungsmotor bzw. ein Antrieb eine Mehrzahl von Antriebszylindern, einen Antriebsgeschwindigkeits- bzw. - drehzahlsensor und eine Antriebssteuerungseinheit (ECU) zur Steuerung von Kraftstoffeinspritz- bzw. -zufuhreinrichtungen und wenigstens einer Bremseinrichtung in Abhängigkeit von einer zuletzt gemessenen Antriebsdrehzahl auf. Das Verfahren zur Ermittlung des Arbeitsverhaltens des Antriebs umfaßt ein Betreiben des Antriebs ohne Last bei einer vorbestimmten Drehzahl, ein Auf-Null-Setzen einer durch eine einzelne oder mehrere ausgewählte Kraftstoffzufuhreinrichtungen, welche den Zylindern zugeordnet ist/sind, welche mit der Bremseinrichtung zusammenwirken, gelieferten Kraftstoffdurchflußrate, ein Erhöhen der Menge eines ersten Testkraftstoffdurchflusses bzw. eines Kraftstoffdurchflusses, der von den übrigen Kraftstoffzufuhreinrichtungen geliefert wird, so daß der Antrieb mit der vorgegebenen Antriebsdrehzahl betrieben wird, ein Aktivieren der Bremseinrichtung, die der/den ausgewählten Kraftstoffzufuhreinrichtungen zugeordnet ist, so daß die zugeordneten Antriebszylinder Leistung absorbieren, und wiederum ein Erhöhen der Kraftstoffdurchflußrate, die durch die übrigen Kraftstoffzufuhreinrichtungen zur Verfügung gestellt wird, um einen zweiten Betrag, so daß der Antrieb mit der vorgebenen Antriebsdrehzahl arbeitet. Diese zweite Menge an Kraftstoffdurchflußerhöhung gibt dabei ein Charakteristikum des Arbeitsverhaltens des Antriebs wieder.

In der Zeichnung ist ein nachfolgend näher beschriebenes Ausführungsbeispiel der Erfindung dargestellt. Es zeigt:

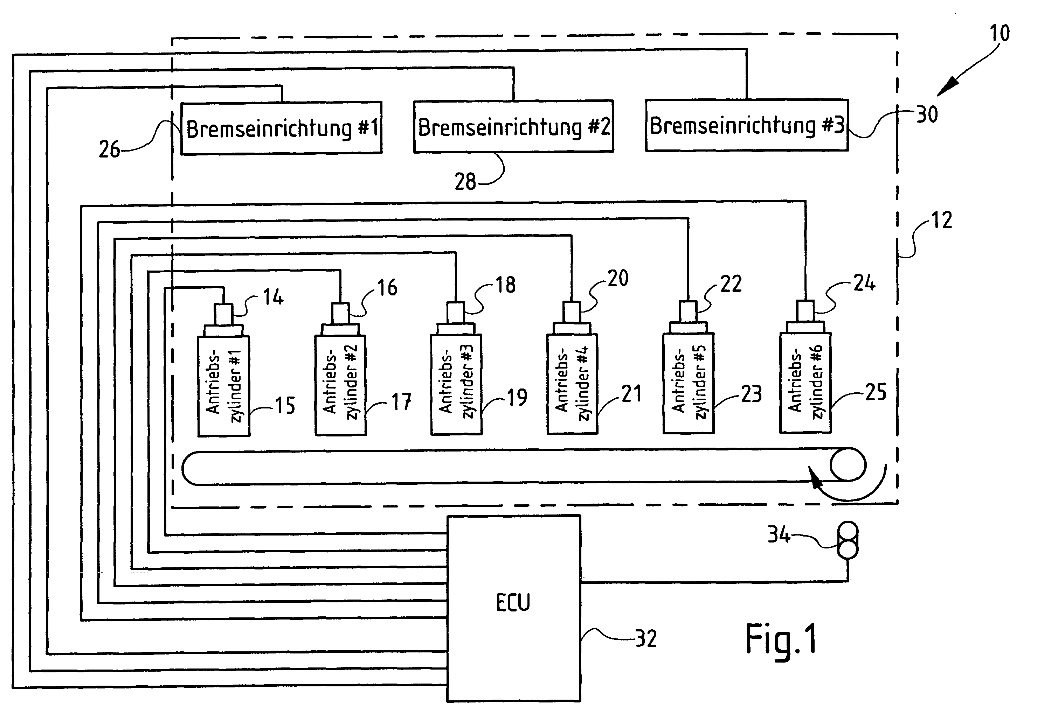

- Fig. 1: eine vereinfachte, schematische Darstellung eines Antriebs-Steuerungs-Systems und

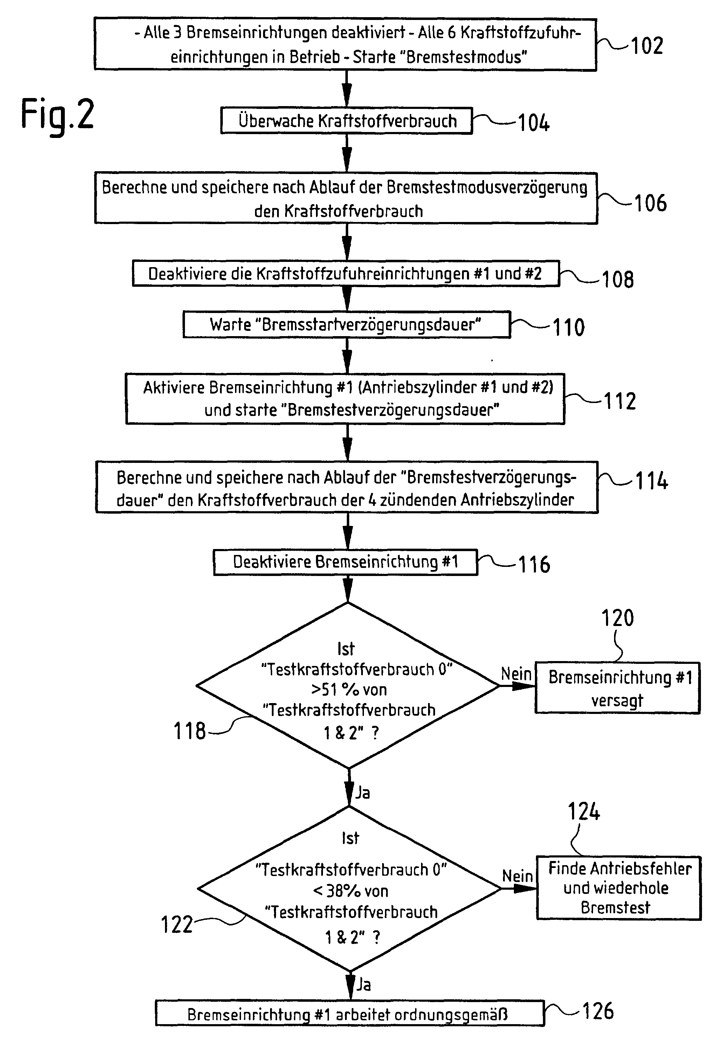

- Fig. 2: ein vereinfachtes logisches Flußdiagramm, das Schritte eines erfindungsgemäßen Verfahrens zeigt.

Ein Antriebs- und Steuerungssystem 10 weist einen Verbrennungsmotor bzw. einen Antrieb 12, wie beispielsweise einen üblichen Dieselantrieb, mit einer Mehrzahl von Kraftstoffeinspritz- bzw. Kraftstoffzufuhreinrichtungen 14, 16, 18, 20, 22 und 24 auf, welche entsprechenden Antriebszylindern 15, 17, 19, 21, 23 und 25 zugeordnet sind. Das Antriebs-Steuerungssystem weist auch eine Mehrzahl konventionell erhältlicher Motorbremsen bzw. Bremseinrichtungen (compression brake) 26, 28 und 30 auf, welche wirksam einem zugehörigen Paar von Antriebszylindern 15, 17, 19, 21, 23, 25 zugeordnet sind. Eine Antriebssteuerungseinheit (ECU) 32 empfängt Signale von verschiedenen Sensoren, unter anderem einem Kurbelwellensensor bzw. Sensor 34, welcher Antriebsdrehzahl- und Kurbelwellenstellungssignale liefert. Die Antriebssteuerungseinheit 32 liefert Steuerungssignale an die Kraftstoffzufuhreinrichtungen 14 - 24 und an die Bremseinrichtungen 26, 28 und 30. Durch diese Komponenten kann das Antriebsverhalten durch ein Ausführen des folgenden Verfahrens ermittelt werden. Das Fehlerkriterium für eine Kraftstoffzufuhr- bzw. Kraftstoffverbrauchsabweichung wird von Antrieb zu Antrieb in Abhängigkeit von der Reibungs- und Bremseffizienz des Antriebs variieren.

Die folgenden Bedingungen sollten existieren bevor das Verfahren durchgeführt wird. Die Fahrzeuggeschwindigkeit muß auf Null gesetzt und dort gehalten werden. Die Antriebssteuerungseinheit 32 muß so eingestellt sein, daß sie eine gleichbleibende Antriebsdrehzahl, beispielsweise von 1500 U/min aufrechterhält. Eine PTO (nicht gezeigt) und eine Kupplung (nicht gezeigt) müssen ausgerückt sein, so daß der Antrieb 12 nicht belastet ist. Der Antriebsöldruck muß sich innerhalb eines vorbestimmten Bereich befinden.

Das Verfahren beginnt mit einem Schritt 102, welcher bestätigt, daß alle drei Bremseinrichtungen 26 - 30 inaktiv sind, daß alle sechs Kraftstoffzufuhreinrichtungen 14 - 24 wirksam sind, und ein Bremstestmoduszeitglied aktiviert. Dann wird in Schritt 104, der durch alle sechs Kraftstoffzufuhreinrichtungen 14 - 24 während der Bremstestmodusverzögerung verbrauchte Kraftstoff ermittelt, und in Schritt 106 wird nach einer Bremstestmodusverzögerung der Kraftstoffverbrauch durch alle sechs Kraftstoffzufuhreinrichtungen 14 - 24 errechnet und als "Testkraftstoffverbrauch 0" gespeichert.

Schritt 108 deaktiviert dann die Kraftstoffzufuhreinrichtungen 14 und 16. Schritt 110 bewirkt eine Verzögerung für eine "Bremsstartverzögerungsdauer". Schritt 112 aktiviert dann die Bremseinrichtung 26 (welche den Kraftstoffzufuhreinrichtungen 14 und 16 und den Antriebszylindern 15 und 17 zugeordnet ist) und aktiviert das Bremstestmoduszeitglied.

Dann berechnet Schritt 114 nach einer Bremstestverzögerungsdauer den Kraftstoff, der durch die vier zündenden Kraftstoffzufuhreinrichtungen 18 - 24 während der Bremsverzögerungsdauer verbraucht wurde, und speichert die Ergebnisse als Testkraftstoffverbrauch 1 & 2, wonach Schritt 116 die Bremseinrichtung 26 deaktiviert.

Schritt 118 vergleicht den Testkraftstoffverbrauch 1 & 2 mit dem Testkraftstoffverbrauch 0, und wenn der Testkraftstoffverbrauch 0 51% des Testkraftstoffverbrauchs 1 & 2 (bei einem typischen Antrieb) nicht übersteigt, ermittelt bzw. stellt Schritt 120 dann fest, daß die Bremseinrichtung 26 versagt hat. Im anderen Fall wird Schritt 122 ausgeführt. Wenn in Schritt 122 der Testkraftstoffverbrauch 0 38% des Testkraftstoffverbrauchs 1 & 2 nicht unterschreitet, bestimmt dann Schritt 124 bzw. stellt fest, daß ein Antriebsfehler vorliegt und bewirkt, daß der Test wiederholt wird, anderenfalls stellt Schritt 126 fest, daß die Bremseinrichtung 26 ordnungsgemäß arbeitet. Das Vorstehende illustriert den Ablauf des Verfahrens für eine Bremseinrichtung 26, 28 und 30. Um alle Bremseinrichtungen 26, 28, 30 und die zugehörigen Antriebszylinder 15, 17, 19, 21, 23, 25 zu testen, können die Schritte 102 - 116 für jede Bremseinrichtung wiederholt werden und im Anschluß die Schritte 118 - 126 dreimal, einmal für jede der Bremseinrichtungen 26, 28 und 30, wiederholt werden.

Dann setzt die Antriebssteuerungseinheit 32 die Kraftstoffdurchflußrate der Kraftstoffzufuhreinrichtungen 14 und 16 (der Bremseinrichtung 26 zugeordnet) auf Null und erhöht die Kraftstoffzufuhr der verbleibenden vier Kraftstoffzufuhreinrichtungen 18 - 24, um die vorbestimmte Antriebsdrehzahl aufrechtzuerhalten. Dann wird die Bremseinrichtung 26 aktiviert, und der Antriebssteuerungseinheit 32 wird wieder erlaubt, die Kraftstoffzufuhrrate der verbleibenden vier Kraftstoffzufuhreinrichtungen 18 - 24 zu erhöhen, um die vorbestimmte Antriebsdrehzahl aufrechtzuerhalten. So wird die Kraftstoffdurchflußmengen- bzw. Kraftstoffverbrauchserhöhung bestimmt, die benötigt wird, um das Paar gebremster Zylinder, das den Kraftstoffzufuhreinrichtungen 14 and 16 zugeordnet ist, zu betreiben, und diese zweite Menge an Kraftstoffdurchflußerhöhung bzw. Kraftstoffverbrauch verkörpert ein Verhaltenscharakteristikum des Antriebs 12. Da die Kraftstoffdurchflußrate bzw. die Kraftstoffmenge, die an jeden Antriebszylinder 15, 17, 19, 21, 23, 25 pro Arbeitszyklus geliefert wird, grob proportional zu der Leistung ist, die durch jeden Antriebszylinder 15, 17, 19, 21, 23, 25 erzeugt wird, kann das Kraftstoffdurchflußraten- bzw. Kraftstoffverbrauchssignal einer elektronischen Antriebssteuerungseinheit 32 dazu verwendet werden, die durch jeden Antriebszylinder 15, 17, 19, 21, 23, 25 erzeugte Leistung zu repräsentieren. Die Übertragung des oben beschriebenen Verfahrens in eine Standardcomputersprache zur Ausführung durch eine Antriebssteuerungseinheit 32 ist für den Fachmann offensichtlich.

Wenn der prozentuale Anstieg der Kraftstoffdurchflußrate bzw. des Kraftstoffverbrauchs der Kraftstoffzufuhreinrichtungen 18 - 24 einen vorbestimmten Grenzwert nicht übersteigt, können zwei Möglichkeiten die potentielle Ursache sein. Erstens kann das Motorbremssystem fehlerhaft sein oder es liefern die vier Leistung erzeugenden Antriebszylinder 19 - 25 zweitens weniger Leistung als sie erzeugen sollten. Indem dieser Test alle drei Bremseinrichtungen 26, 28 und 30 durchlaufen hat, kann bestimmt werden, ob ein bestimmtes Paar von Antriebszylindern 15 - 25 eine geringere Leistungsabgabe aufweist (da für jede Bremseinrichtung 26, 28, 30 ein unterschiedliches Paar von Antriebszylindern 15 - 25 Leistung erzeugen wird) oder ob eine bestimmte Bremseinrichtung 26, 28, 30 weniger Leistung absorbiert als sie absorbieren sollte.

So kann die Funktionsweise des Motorbremssystems durch die Verwendung der Antriebssteuerungseinheit 32 zur Überwachung der Kraftstoffdurchflußrate bzw. des Kraftstoffverbrauchs der vier Leistung produzierenden Antriebszylinder getestet werden, während gleichzeitig ein leistungsabsorbierender Betrieb der Antriebszylinder mit den Bremseinrichtungen aktiviert wird, und es kann bestimmt werden, ob ein Paar von Antriebszylindern weniger Leistung als normalerweise liefert. Dieses Verfahren erfordert keine zusätzliche Ausrüstung an dem Antrieb 12. Es benötigt nur das Bremseinrichtungssystem und eine Antriebssteuerungseinheit 32. Dieses Verfahren kann nicht nur für einen Fertigungsabschlußtest eingesetzt werden, sondern es kann auch dazu verwendet werden, die Arbeitsweise im Feld- bzw. Arbeitseinsatz zu testen, wie beispielsweise in einem Einsatzservicemodus zur Antriebs- und Bremseinrichtungsprüfung.

Dieses Verfahren kann an jedem Antrieb verwendet werden, der die Fähigkeit aufweist, die Kraftstoffzufuhr einiger Antriebszylinder zu steuern, während gleichzeitig eine Bremseinrichtung auf die übrigen Antriebszylinder einwirkt. Darüber hinaus kann diese Konzept an Antrieben verwendet werden, welche eine separate Bremseinrichtung für jeden Antriebszylinder aufweisen. Beispielsweise kann die Leistung, die durch den Antrieb geliefert wird, bei einem 6-Zylinder-Antrieb, der mit sechs Bremseinrichtungen ausgestattet ist, üblicherweise 68% bis 71% der Volleistung bei gleicher Antriebsdrehzahl betragen, wenn eine Bremseinrichtung aktiviert ist und die übrigen fünf Antriebszylinder mit Kraftstoff versorgt werden. Bei einem 6-Zylinder-Antrieb mit Bremseinrichtungen, die zwei Antriebszylinder auf einmal aktivieren, beträgt die durch den Antrieb gelieferte Leistung, wenn die übrigen vier Antriebszylinder mit Kraftstoff versorgt werden, normalerweise 36% bis 42% der Volleistung bei gleicher Antriebsdrehzahl. Bei einem 6-Zylinder-Antrieb, der mit Bremseinrichtungen versehen ist, die drei Antriebszylinder gleichzeitig aktivieren, wird, wenn die übrigen drei Antriebszylinder mit Kraftstoff versorgt werden, die Leistung des Antriebs normalerweise bei 4% bis 13% der Volleistung bei der gleichen Antriebsdrehzahl liegen. Bei einem 6-Zylinder-Antrieb, der mit einer Bremseinrichtung ausgestattet ist, welche vier Antriebszylinder gleichzeitig aktiviert, werden die beiden übrigen Antriebszylinder üblicherweise nicht in der Lage sein, genügend Leistung zur Verfügung zu stellen, um die durch die vier gebremsten Antriebszylinder absorbierte Leistung zu überschreiten. Ähnliche Berechnungen können für Antriebe mit mehr oder weniger als sechs Zylindern durchgeführt werden, und die Erfindung ist bei solchen Antrieben ebenfalls anwendbar.

Die Leistungsabsorption, die aus der Aktvierung einer Bremseinrichtung resultiert, ist eine Funktion der Antriebsdrehzahl, des Drucks in der Ansaugleitung (nicht gezeigt), des Antriebs-Verdichtungskoeffizienten, der Hubprofileinstellung der Kurbelwelle (nicht gezeigt) und der Ventilspieleinstellung (nicht gezeigt) der Bremseinrichtung. Die einzige Variable, die sich während eines Betrieb des Antriebs 12 ändert, ist die Antriebsdrehzahl. Bei einer vorgegebenen Antriebsdrehzahl sollte eine bestimmte Leistungsabsorption für ein Paar aktivierter Bremseinrichtungen auftreten.

Obwohl die vorliegende Erfindung in Verbindung mit einer spezifischen Ausführungsform beschrieben wurde, sollte es deutlich sein, daß viele Alternativen, Modifikationen und Variationen für den Fachmann im Licht der vorstehenden Beschreibung offensichtlich sind. Entsprechend ist es beabsichtigt, daß die Erfindung alle solchen Alternativen, Modifikationen und Variationen einschließt, welche in den Umfang der folgenden Ansprüche fallen.

## Patentansprüche

1. Verfahren zur Ermittlung von Kennwerten eines Antriebs (12) mit einer Mehrzahl von Antriebszylindern (15, 17, 19, 21, 23, 25), einer Mehrzahl von Kraftstoffzufuhreinrichtungen (14, 16, 18, 20, 22, 24), welche entsprechenden Antriebszylindern (15, 17, 19, 21, 23, 25) zugeordnet sind, wenigstens einer Bremseinrichtung (26, 28, 30) einem Sensor (34) und einer Antriebssteuerungseinheit (32) zur Steuerung der Kraftstoffzufuhreinrichtungen (14, 16, 18, 20, 22, 24) und der Bremseinrichtung (26, 28, 30) in Abhängigkeit von einer durch den Sensor (34) zuletzt gemessenen Antriebsdrehzahl, wobei der Antrieb (12) zuerst unbelastet mit einer vorgegebenen Antriebsdrehzahl betrieben wird, im Anschluß die Kraftstoffzufuhr an mindestens einen Antriebszylinder (15, 17, 19, 21, 23, 25), der der Bremseinrichtung (26, 28, 30) zugeordnet ist, unterbunden wird, die Kraftstoffzufuhr, die an die übrigen Antriebszylinder (15, 17, 19, 21, 23, 25) erfolgt, um einen ersten Wert erhöht wird, so daß der Antrieb (12) mit der vorgebenen Antriebsdrehzahl arbeitet, die Bremseinrichtung (26, 28, 30) aktiviert wird und im Anschluß ein Erhöhen der Kraftstoffzufuhr zu den übrigen Antriebszylindern (15, 17, 19, 21, 23, 25) um einen zweiten Betrag erfolgt, so daß der Antrieb (12) mit der vorgebenen Antriebsdrehzahl arbeitet.

2. Verfahren nach Anspruch 1, **dadurch gekennzeichnet, daß** ein erster Testkraftstoffverbrauch ermittelt wird, während der Antrieb (12) unbelastet mit der vorgegebenen Antriebsdrehzahl betrieben wird.

3. Verfahren nach Anspruch 2, **dadurch gekennzeichnet, daß** nach der Erhöhung der Kraftstoffzufuhr ein zweiter Testkraftstoffverbrauch ermittelt wird.

4. Verfahren nach Anspruch 2 oder 3, **dadurch gekennzeichnet, daß** die Testkraftstoffverbrauchswerte durch die Antriebssteuerungseinheit (32) gespeichert und miteinander verglichen werden.

5. Verfahren nach einem oder mehreren der vorherigen Ansprüche, **dadurch gekennzeichnet, daß** festgestellt wird, daß die aktivierte Bremseinrichtung (26, 28, 30) nicht ordnungsgemäß arbeitet, wenn der erste Testkraftstoffverbrauch einen bestimmten prozentualen Anteil des zweiten Testkraftstoffverbrauchs übersteigt.

6. Verfahren nach einem oder mehreren der vorherigen Ansprüche, **dadurch gekennzeichnet, daß** festgestellt wird, daß ein Antriebsfehler aufgetreten ist, wenn der erste Testkraftstoffverbrauch einen bestimmten zweiten prozentualen Anteil des zweiten Testkraftstoffverbrauchs unterschreitet, wobei der zweite prozentuale Anteil geringer ist als der erste prozentuale Anteil.

7. Verfahren nach einem oder mehreren der vorherigen Ansprüche, **dadurch gekennzeichnet, daß** die genannten Schritte für mehrere Bremseinrichtungen (26, 28, 30) durchgeführt werden.

## Claims

1. A method of determining parameters of a drive unit (12) with a plurality of drive cylinders (15, 17, 19, 21, 23 25), a plurality of fuel supply devices (14, 16, 18, 20, 22, 24) which are associated with corresponding drive cylinders (15, 17, 19, 21, 23, 25), at least one brake device (26, 28, 30), a sensor (34) and a drive control unit (32) for controlling the fuel supply devices (14, 16, 18, 20, 22, 24) and the brake device (26, 28, 30) in dependence on a drive speed of rotation last measured by the sensor (34), wherein the drive unit (12) is first operated under no a load with a predetermined drive speed of rotation, subsequently the fuel supply to at least one drive cylinder (15, 17, 19, 21, 23, 25) which is associated with the brake device (26, 28, 30) is stopped, the fuel supply being effected to the other drive cylinders (15, 17, 19, 21, 23, 25) is increased by a first value, so that the drive unit (12) operates at the predetermined speed of rotation, the brake device (26, 28, 30) is activated and subsequently an increase by a second amount of the fuel supply to the other drive cylinders (15, 17, 19, 21, 23, 25) is effected, so that the drive unit (12) operates with the predetermined drive speed of rotation.

2. A method according to claim 1, **characterized in that** a first test fuel consumption is determined while the drive unit (12) is operating under no a load at the predetermined drive speed of rotation.

3. A method according to claim 2, **characterized in that**, after the increase of the fuel supply, a second test fuel consumption is determined.

4. A method according to claim 2 or 3, **characterized in that** the test fuel consumption values are stored by the drive control unit (32) and compared with one another.

5. A method according to one or more of the preceding claims, **characterized in that** it is established that the activated brake device (26, 28, 30) is not operating correctly when the first test fuel consumption exceeds a specific percentage of the second test fuel consumption.

6. A method according to one or more of the preceding claims, **characterized in that** it is established that a drive error has occurred when the first test fuel consumption falls below a specific second percentage of the second test fuel consumption, wherein the second percentage is smaller than the first percentage.

7. A method according to one or more of the preceding claims, **characterized in that** the said steps are carried out for a plurality of brake devices (26, 28, 30).

## Revendications

1. Procédé pour déterminer les paramètres d'un mécanisme d'entraînement (12) avec une pluralité de dispositifs d'alimentation de carburant (14, 16, 18, 20, 22, 24) qui sont affectés à des cylindres d'entraînement correspondants (15, 17, 19, 21, 23, 25), au moins un dispositif de freinage (26, 28, 30), un capteur (34) et une unité de commande d'entraînement (32) pour commander les dispositifs d'alimentation de carburant (14, 16, 18, 20, 22, 24) et le dispositif de freinage (26, 28, 30) en fonction d'une vitesse d'entraînement mesurée en dernier par le capteur (34), dans lequel le mécanisme d'entraînement (12) fonctionne d'abord sans charge à une vitesse d'entraînement prédéterminée, ensuite l'alimentation de carburant est interrompue sur au moins un cylindre d'entraînement (15, 17, 19, 21, 23, 25), qui est affecté au dispositif de freinage (26, 28, 30), l'alimentation de carburant, qui fonctionne sur les autres cylindres d'entraînement (15, 17, 19, 21, 23, 25), est augmentée d'une première valeur de sorte que le mécanisme d'entraînement (12) fonctionne à la vitesse d'entraînement prédéterminée, le dispositif de freinage (26, 28, 30) est activé et, ensuite, l'alimentation de carburant aux autres cylindres d'entraînement (15, 17, 19, 21, 23, 25) est augmentée d'une deuxième valeur de sorte que le mécanisme d'entraînement (12) fonctionne à la vitesse d'entraînement prédéterminée.

2. Procédé selon la revendication 1, **caractérisé en ce qu'**une première consommation de carburant d'essai est déterminée pendant que le mécanisme d'entraînement (12) fonctionne à la vitesse d'entraînement prédéterminée sans charge.

3. Procédé selon la revendication 2, **caractérisé en ce que**, après l'augmentation de l'alimentation de carburant, une deuxième consommation de carburant d'essai est déterminée.

4. Procédé selon la revendication 2 ou 3, **caractérisé en ce que** les valeurs de consommation de carburant d'essai sont mémorisées par l'unité de commande d'entraînement (32) et comparées les unes avec les autres.

5. Procédé selon une ou plusieurs des revendications précédentes, **caractérisé en ce que** l'on constate que le dispositif de freinage (26, 28, 30) activé ne fonctionne pas correctement lorsque la première consommation de carburant d'essai dépasse une portion déterminée en pourcentage de la deuxième consommation de carburant d'essai.

6. Procédé selon une ou plusieurs des revendications précédentes, **caractérisé en ce que** l'on constate qu'un défaut d'entraînement et apparu lorsque la première consommation de carburant d'essai est inférieure à une portion déterminée en pourcentage de la deuxième consommation de carburant d'essai, la deuxième portion en pourcentage étant inférieure à la première portion en pourcentage.

7. Procédé selon une ou plusieurs des revendications précédentes, **caractérisé en ce que** les étapes mentionnées sont réalisées pour plusieurs dispositifs de freinage (26, 28, 30).
